## Europäisches Patentamt

## European Patent Office

## Office européen des brevets

(11) Publication number: **0 037 263**
**B1**

# EUROPEAN PATENT SPECIFICATION

(45) Date of publication of patent specification: **01.10.86**

(51) Int. Cl.⁴: **G 02 B 6/10, G 02 F 1/01**

(21) Application number: **81301333.1**

(22) Date of filing: **27.03.81**

(54) Optical waveguide device.

(30) Priority: **28.03.80 JP 40776/80**
**07.05.80 JP 60129/80**
**30.08.80 JP 120192/80**
**30.08.80 JP 120193/80**

(43) Date of publication of application:
**07.10.81 Bulletin 81/40**

(45) Publication of the grant of the patent:
**01.10.86 Bulletin 86/40**

(84) Designated Contracting States:
**DE FR GB**

(56) References cited:
**US-A-3 464 762**
**US-A-3 765 773**
**US-A-3 856 379**
**US-A-4 032 217**
**US-A-4 047 801**
**US-B- 540 872**

(73) Proprietor: **FUJITSU LIMITED**
**1015, Kamikodanaka Nakahara-ku**
**Kawasaki-shi Kanagawa 211 (JP)**

(72) Inventor: **Shirasaki, Masataka**
**1461-601, Takaishi Tama-ku**
**Kawasaki-shi Kanagawa 215 (JP)**
Inventor: **Obokata, Takeshi**
**3-16-11, Ohnodai Sagamihara-shi**
**Kanagawa 229 (JP)**

(74) Representative: **Abbott, Leonard Charles et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an optical waveguide device, and more particularly to an optical waveguide device having a transparent waveguide member.

In for example an optical communication system, the optical waveguide device is one of the most important members for constructing the system. The optical waveguide device can be used to make an optical switch, an optical modulator, an optical isolator or an optical circulator. Especially, the present invention referes to the device made of an electro-optic crystal or the device made of a magneto-optic crystal.

As widely known, the optical waveguide device made of the electro-optic crystal or the magneto-optic crystal is utilized for switching a plane of polarization so as to switch the optical path, as a non-mechanical transducer. Generally, a mechanical switch, having the same function for switching light paths, produces a disadvantage in that it is difficult to increase the reliability and also achieve a high-speed switching operation. Contrary to this, the above-mentioned non-mechanical switch does not produce such disadvantages.

The optical waveguide device, made of an electro-optic crystal, can select a plane of polarization of 90° or 0° by applying or not applying an external electric field thereto. Similarly, the optical waveguide device, made of a magneto-optic crystal, can change its plane of polarization by +45° or −45° when an external magnetic field is applied in a forward direction or a reverse direction. Regarding the electro-optic crystal, it is preferable to reduce the thickness thereof to be as small as possible, so as to obtain a high electric field strength created therein. Similarly, regarding the magneto-optic crystal, it is preferable to reduce the thickness thereof to be as small as possible, so as to decrease the demagnetizing field induced therein, and, accordingly to obtain a high internal magnetic field strength. However, it is very important to take into account the fact that, when the thickness of the transducing crystal is reduced, the function for changing the plane of polarization can no longer be maintained at a high degree of accuracy. That is, for example, a deleterious crosstalk of light is generated in the crystal. Briefly the reason for this is as follows. When the crystal is made small in thickness, for example 50 μm, light propagated in the crystal, cannot pass therethrough without abutting against the walls thereof. Thus, the light passes through the crystal whilst reflecting off the wall, repeatedly. In this case, the phase shift, induced by the occurrence of each reflection, of a reflected P polarized light component is not the same as the phase shift of a reflected S polarized light component. As is known by persons skilled in the art, the P polarized light component is a parallel component with respect to a plane along which the light runs for electric field direction. Contrary to this, the S polarized light component is perpendicular to the above mentioned plane. Since, as mentioned above, the amount of the phase shift of the reflected P polarized light component is not the same as that of the reflected S polarized light component, the light, to be propagated in the crystal, cannot pass therethrough without changing polarization state, which is defined by both the P and S polarized light components. In such a case, the output light from the crystal, cannot accurately be polarized and, thus the previously mentioned deleterious crosstalk of light is produced thereby.

Therefore, it is an object of the present invention to provide an optical waveguide device which, even though the thickness of the device is made very small, produces almost no deleterious crosstalk of light therefrom.

An optical waveguide device according to the invention comprises an optical waveguide member having a refractive index $n0$ and whose thickness is very much smaller than its length along an optical axis, the waveguide member receiving a light beam through an input surface, modifying the beam as it passes generally parallel to the optical axis, and emitting the modified light beam from an output surface, the light beam having undergone a plurality of reflections from top and bottom surfaces of the waveguide member substantially parallel to the optical axis, characterized in that each of the top and bottom surfaces has superimposed thereon at least an inner and an outer transparent phase-matching layers, the inner transparent phase matching layer having a thickness $t$ and a refractive index $n1$ and the outer transparent phase matching layer having a refractive index $n2$, the refractive indices satisfying the condition $n2 < n0 < n1$ and the thickness $t$ of the inner transparent phase matching layer being such that the inner and outer transparent phase matching layers act to decrease substantially the difference between the phase shift experienced on reflection at each of the top and bottom surfaces by P-polarised and S-polarised components of the light beam.

According to a further aspect of the invention, an optical waveguide device comprises an optical waveguide member having a refractive index $n0$ and whose thickness is very much smaller than its length along an optical axis, the waveguide member receiving a light beam through an input surface, modifying the beam as it passes generally parallel to the optical axis, and emitting the modified light beam from an output surface, the light beam having undergone a plurality of reflections from top and bottom surfaces of the waveguide member substantially parallel to the optical axis, characterized in that each of the top and bottom surfaces has superimposed thereon an inner transparent phase-matching layer having a thickness $t1$ and a refractive index $n1$ located on the waveguide member, an intermediate transparent phase-matching layer having a thickness $t2$ and a refractive index $n2$ located on the inner phase-matching layer and an outer transparent phase-matching layer having a refractive index n3 located on the intermediate phase-matching layer, the refractive indices satisfying the condition that n1<n0<n2 and n3<n0<n2, and the thicknesses t1 and t2 being such that the inner, intermediate and outer transparent phase-matching layers act to decrease substantially the difference between the phase shifts experienced on reflection at each surface by P-polarized and S-polarized components of the light beam.

US—A—4032217 discloses an optical waveguide device designed to minimize the phase difference between P- and S- waves (TE and TM waves). In the device shown in this specification a transparent layer in which the TE and TM modes propagate has an additional di-electric film layer deposited thereon. The additional layer has a thickness such that phase-tuning is effected for the TE and TM waves along the direction of propagation of these waves within the first layer. The additional layer is provided with a metallic coating on that face which is not in contact with the first layer. As a consequence of the metallic coating, a total reflection mode does not occur at this interface and therefore some absorption of light is inevitable.

The present invention will be more apparent and better understood from the following detailed description in conjunction with the accompanying drawings, in which:—

Figure 1 is a schematic view of a conventional optical waveguide apparatus including the electro-optic crystal;

Fig. 2 is a graph depicting a relationship between an incidence angle φ and a phase shift Δ by reflection;

Fig. 3 is a view showing a light path under a total reflection mode, used for explaining phase shifts induced in the P and S polarized light components;

Fig. 4 is a cross-sectional view of a first embodiment according to the present invention;

Fig. 5 is a perspective view of the optical waveguide device according to the first embodiment of the present invention;

Fig. 6A is a plan view of the optical waveguide device shown in Fig. 5;

Fig. 6B is a side view of the optical waveguide device shown in Fig. 5;

Fig. 7 is a schematic view of an application of inventional optical waveguide apparatus including the magneto-optic crystal;

Fig. 8 is a cross-sectional schematic view of the members 71 and 72 shown in Fig. 7, used for explaining the operational principle of the magneto-optic crystal;

Fig. 9 is a cross-sectional view of the optical waveguide device, including the magneto-optic crystal, based on the first embodiment (Figs. 4, 5, 6A and 6B) of the present invention;

Fig. 10 is a cross-sectional view, partially cut off, of an optical waveguide device according to a second embodiment of the present invention;

Fig. 11 is a cross-sectional view, partially cut off, of an optical waveguide device, including the electro-optic crystal, according to the present invention;

Fig. 12 is a side view of an optical waveguide device according to a third embodiment of the present invention;

Figure 13 a graph depicting a relationship between an incidence angle φ and a phase shift Δ of the second embodiment; and,

Figure 14 is a total perspective view of an opticall waveguide apparatus including the optical waveguide device according to the present invention.

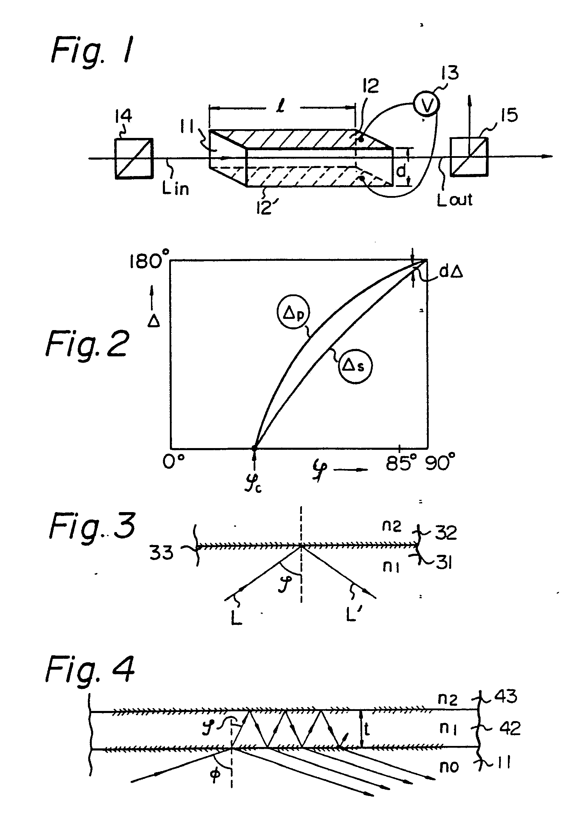

Figure 1 is a schematic view of a conventional optical switch including the electro-optic crystal. In this figure, the reference numeral 11 represents a transparent waveguide member, 12 and 12' represent electrodes mounted on the top and bottom surfaces of the member 11, 13 a power source (V), 14 and 15 represent, respectively a polarizer and an analyzer. The member 11 is specifically the electro-optic crystal and the polarizer 14 and the analyzer 15 are specifically prisms. The member 11 can change polarization plane by 90° and 0° selectively when an external voltage V is supplied from the power source 13 and applied onto the electrodes 12 and 12' and vice versa. In this case, the function for changing the plane of polarization can be more efficient than usual by, firstly reducing the thickness d of the member 11, secondly increasing the length l thereof or thirdly increasing the voltage level of the power source 13 connected to the electrodes 12 and 12'. It should be recognized that said function for changing the plane of polarization can be improved by increasing the strength of the electric field (E) to be induced in the member 11, in which the electric field E is generally expressed by an equation, that is

$$E = \frac{V}{d}$$

Accordingly, the value E may be increased by shortening the thickness d and/or increasing the level of the voltage V. On the other hand, it is also useful to increase the length l. This is because, the longer the length length l, becomes, the greater the influence on the polarization of the light becomes.

In general, it is preferable to drive the member 11 at a low level of the voltage V, from an economical view point. However, if the level of the voltage V is decreased, without reducing the function of polarization, the ratio of l/d must be larger than usual, for example the thickness d should be 200 μm and the length l should be 2 cm. Accordingly, the light $L_{in}$ can usually pass through the member 11 without abutting against the top and bottom surfaces thereof toward the output surface of the member 11. In other words, the light $L_{in}$ can usually pass through the member 11 without creating any reflection on the top or bottom surfaces. However, if the ratio of l/d is increased, for example, so that d=200 μm and l=2 cm, it is almost impossible for the light $L_{in}$ to pass through the member 11 without reflecting from the top and bottom surface thereof. This is because, the light $L_{in}$ generally has characteristics in that the width of the beam is gradually and slightly expands during its propagation light along the light path in the member 11. In this case, as previously mentioned, the respective phase shifts are created in the reflected P and S polarized light components. To make the matter worse, the amount of the phase shifts of the P and S polarized light components are not the same and, therefore, the output light from the output surface of the member 11 cannot accurately be polarized. The difference between the above mentioned phase shifts will be clarified with reference to Fig. 2.

Fig. 2 is a graph depicting a relationship between an incidence angle φ and a phase shift Δ. In the graph, the ordinate indicates the phase shift Δ between the phase of the incident light and the phase of the reflected light, regarding the P and S polarized light components. The abscissa indicates the incidence angle φ, regarding the P and S polarized light components. A curve $\Delta_p$ indicates the characteristics of the P polarized light component and a curve $\Delta_s$ indicates the characteristics of the S polarized light component. As seen from the graph, the amount of the phase shifts $\Delta_p$ and $\Delta_s$ are not the same, except in cases where the incidence angle φ is 90° or a critical angle $\varphi_c$. Thus, there is a difference dΔ between the phase shifts $\Delta_p$ and $\Delta_s$. In, for example an optical communication system, the light L (Fig. 1) is usually directed solely onto the input surface of the member 11 (Fig. 1) at about right angles thereto and, accordingly the incidence angle φ of the light L with respect to the top or bottom surface may be near 90° or varies between about 85° and 90°. In this range of the incidence angles φ, the difference dΔ between the phase shifts may be very small. However, when the ratio of l/d is selected to be large, as is done in the present invention, the reflections, between the light L and the top and bottom surfaces, may occur repeatedly whilst the light L travels through the member 11. Thus, the accumulated difference dΔ will finally become very large, which means that an accurate polarization cannot be expected.

Fig. 3 is a view showing a light path under a total reflection mode, used for explaining phase shifts induced in the P and S polarized light components. In this figure, a layer 31 having a refractive index of n1 and a layer 32 having a refractive index of n2, are attached to each other via a boundary face 33. The light L is projected onto the boundary face 33 at the incidence angle φ, under the total reflection mode, and the reflected light L' is obtained. The phase shift $\Delta_p$, between the P polarized lights L and L', and the phase shift $\Delta_s$, between the S polarized light L and L', are expressed by the following equation (1).

$$\tan\frac{\Delta p}{2}=-\frac{\sqrt{\sin^2\varphi-\sin^2\varphi_0}}{\sin^2\varphi_0\cdot\cos\varphi}$$

$$\tan\frac{\Delta s}{2}=-\frac{\sqrt{\sin^2\varphi-\sin^2\varphi_0}}{\cos\varphi} \quad (1)$$

(where, $\sin\varphi_0=n2/n1$)

The difference in phase shifts, dΔ, can be reduced to zero using an arrangement of multilayers, shown in Fig. 4, which will now be taken into consideration. Fig. 4 is a cross-sectional view of a first embodiment according to the present invention. In this figure, a layer 42 having the refractive index of n1 and the thickness of t, is attached onto a transparent waveguide member 11 having the refractive index of n0 and, further a layer 43 having the refractive index of n2 is mounted on the layer 42. Furthermore, the refractive indexes n0, n1 and n2 are chosen so as to satisfy the following inequality:

n2<n0<n1

In Fig. 4, since the inequality n2<n0 stands, the light, travelling in the layer 42, is reflected by the layer 43. In this case, the light, travelling in the layer 11, has a light path which is longer than usual because of an additional light path. The additional light path is created in the layer 42 by the reflection on the layer 43. Consequently, the above mentioned phase shift Δ (regarding both the phase shifts $\Delta_p$ and $\Delta_s$) is modified to be a phase shift Δ' due to the presence of said additional light path. The modified phase shift Δ' is expressed by the following equation (2), provided that the plane having the same phase is created in a plane being perpendicular to a direction in which the light travels.

$$\Delta'=2\varphi\{\frac{2t}{\cos\varphi}/\frac{\lambda}{n1}-2t\tan\varphi\sin\varphi/\frac{\lambda}{n0}\} \quad (2)$$

(where the symbol λ denotes the wavelength of the light, the symbol φ denotes the incidence angle (refer to Fig. 4)).

Then the following equation (3) is obtained when the well-known relationship, that is, n0 sinφ=n1 sinφ, is substituted for the equation (2).

$$\Delta'=\frac{4\pi t\, n1}{\lambda}\cos\varphi \quad (3)$$

It should be recognized that, since the relationship

$$\frac{\pi}{2}-\varphi<<1,$$

stands (as previously mentioned, the incidence angle is within a range between about 85° and 90°

$$\left(\frac{\pi}{2}\right)),$$

the elements $\tan\varphi$, $\cos\varphi$ and $\sin\varphi$ of the equation (2) are considered to be constant values by an approximation of a first order equation.

Now, a phase shift $\delta_p$ and a phase shift $\delta_s$ are defined. The phase shift $\delta_p$, regarding the P polarized light component, is a composite value of both the phase shift $\Delta_p$ of the equation (1) and the modified phase shift $\Delta'$ of the equation (3). Similarly, the phase shift $\delta_s$, regarding the S polarized light component, is a composite value of both the phase shift $\Delta_s$ of the equation (1) and the modified phase shift $\Delta'$ of the equation (3). These values $\delta_p$ and $\delta_s$ are determined only by the values of n0, n1, n2 and t, in a case where the expression,

$$\varphi \doteqdot \frac{\pi}{2},$$

stands.

Regarding a reflection coefficient r, the reflection coefficient $r_p$ of the P polarized light component and the reflection coefficient $r_s$ of the S polarized light component, are expressed by the following equation (4).

$$rp = \frac{\tan(\phi - \varphi)}{\tan(\phi + \varphi)}$$

$$rs = -\frac{\sin(\phi - \varphi)}{\sin(\phi + \varphi)} \tag{4}$$

The incidence angle $\phi$ can be expressed by the equation,

$$\phi = \frac{\pi}{2} - \theta (\theta \ll 1),$$

by introducing a variable $\theta$. Then equation (4), can be rewritten into the following expression (5), when the subsequent terms of the progression series of the variable $\theta$ are abbreviated and only the first term thereof is used.

$$r_p \doteqdot -1 + \frac{2\theta}{\sin\phi\cos\phi} = -1 + K_p\theta$$

$$r_s \doteqdot -1 + 2\theta\tan\phi = -1 + K_s\theta \tag{5}$$

The symbols Kp and Ks denote proportional coefficients and can be determined by the ratio of n0/n1.

The above recited equations and expressions correspond to the case, where a single additional light path exists in the layer 42 of Fig. 4. However, the reflected beam comprises many such additional light path components in the layer 42. Accordingly, the total reflected amplitude produced from all such light paths, should actually be considered. The amplitude A of such total reflection light can be expressed by the following equation (6), provided that an incident light having an amplitude of 1 is projected onto the layer 42 (Fig. 4).

$$A = r + (1 - r^2)e^{i\delta} + (1 - r^2)(-r)e^{2i\delta}$$
$$+ (1 - r^2)(-r)^2 e^{3i\delta} + \dots$$
$$= r + (1 - r^2)e^{i\delta}[1 + (-r)e^{i\delta} + (-r)^2 e^{2i\delta} + \dots]$$

$$= r + \frac{1 - r^2}{r + e^{-i\delta}} \tag{6}$$

(Where, the symbol $\delta$ represents either of the phase shifts $\delta_p$ and $\delta_s$, i denotes the square root of $-1$ and e denotes the base of natural logarithms).

The amplitude A, expressed by a complex number, of the total reflection light can be rewritten into the following equation (7), through a rationalization of the complex number A.

$$A = \frac{2r + (1 + r^2)\cos\delta + i(1 - r^2)\sin\delta}{1 + r^2 + 2r\cos\delta} \tag{7}$$

Then, the phase angle of A, that is $\tan\xi$ (corresponding to the ratio between the real part of the complex number and the imaginary part thereof), can be expressed by the following equation (8), provided that the value $(k\theta - 1)$ (k is a representative of both $k_p$ and $k_s$) is substituted for the value r of the equation (7) and also the item $k^2\theta^2$ is abbreviated, because it is very small.

$$\tan\xi = \frac{K\sin\delta}{(K\theta - 1)(1 - \cos\delta)} \tag{8}$$

As previously mentioned, regarding the equation (5), the variable $\theta$ is expressed as $\theta \ll 1$. Therefore, the equation (8) is rewritten to be the following expression (9).

$$\tan\xi \doteqdot \frac{K\sin\delta}{\cos\delta - 1} \cdot \theta \tag{9}$$

Returning to the graph of Fig. 2, the difference $d\Delta$ should be as small as possible approaching zero within at least in a range between 85° and 90°. In this case, the phase shift of the sum of the multiply reflected beams for P polarized light must be made very close to the corresponding phase shift for S polarized light, so as to avoid the occurrence of deleterious crosstalk. Thus, the value of $\tan\xi$ for the P polarized light component, that is

$$\frac{K_P \sin \delta_P}{\cos \delta_P - 1} \cdot \theta$$

(see the equation (9)), must be the same as, or very close to, the value of tan $\xi$ for the S polarized light component, that is

$$\frac{K_s \sin \delta_s}{\cos \delta_s - 1} \cdot \theta$$

· Consequently, the following equation (10) must be satisfied:

$$\frac{K_p}{K_s} = \frac{\sin \delta_s (1 - \cos \delta_p)}{\sin \delta_p (-\cos \delta_s)} \qquad (10)$$

, In the equation (10), the left term

$$\frac{K_p}{K_s}$$

is determined by the ratio n0/n1 and the right term is determined by n0/n1, n2/n1, n, t. Accordingly, the equation (10) can easily be satisfied by selecting suitable values. For example,

$$n0 = 2.2$$

$$n1 = 2.6$$

$$n2 = 2.15$$

$$\lambda = 1.3 \ \mu m$$

$$t = 361.5 \ nm$$

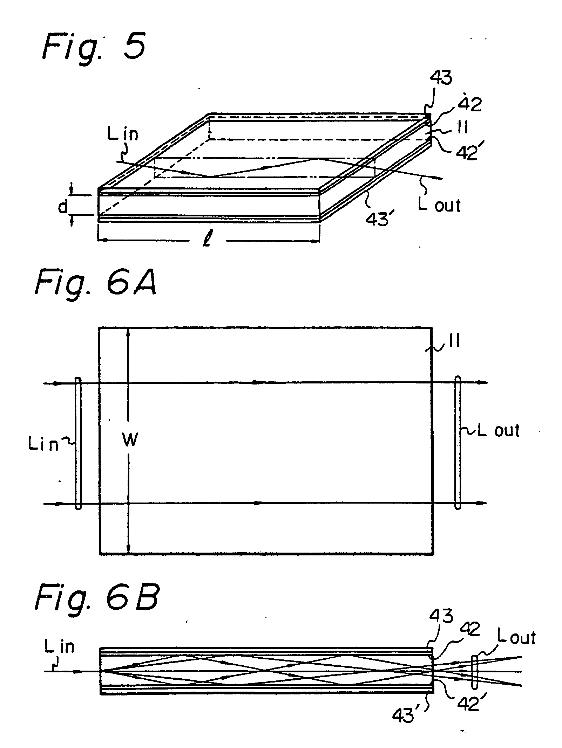

Thus, according to the first embodiment of the. present invention, at least two transparent layers 42 and 43 are coated, as phase-matching layers, on the transparent waveguide member 11 and, at the same time, the values n0, n1, n2 and t are suitably chosen so as to satisfy the equation (10). Fig. 5 is a perspective view of the optical waveguide device according to the first embodiment of the present invention. The members which are represented by the same reference numerals or symbols as those of Figs. 1, 3 and 4, are identical to each other. The reference symbols $L_{in}$ and $L_{out}$ represent, respectively an input light and an output light to be polarized or not, under control of the external voltage V (not shown in Fig. 5 but shown in Fig. 1). Fig. 6A is a plan view of the optical waveguide device shown in Fig. 5. Fig. 6B is a side view of the optical waveguide device shown in Fig. 5. As seen from Fig. 6A, the width W of the member 11 can freely be selected and, accordingly, a planar input light beam $L_{in}$ can be used, where the light will not abut against the side walls. Contrary to this, as seen from Fig. 6B, since the ratio l/d is selected to be large, the light is reflected from the top and bottom surfaces many times while the light travels through the member 11. However, as previously mentioned the output light $L_{out}$ can accurately be polarized, even though the light is reflected many times, and simultaneously the level of the voltage V can be considerably reduced, because the thickness d is selected to be very small, compared to the known device.

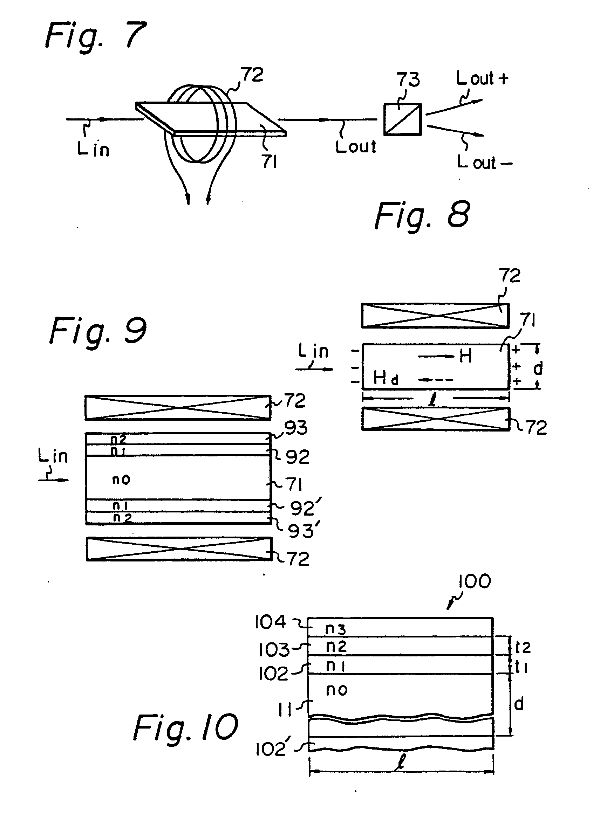

The above mentioned theorem can also be applied to another type of optical waveguide device. Fig. 7 is a schematic view of a known optical waveguide apparatus including a magneto-optic crystal. In this figure, the reference numeral 71 represents a transparent waveguide member, the magneto-optic crystal, 72 represents an electromagnetic coil which generates a magnetic field to be applied to the member 71 and 73 represents an analyzer, such as a prism. The member 71 can change its plane of polarization by $+45°$ or $-45°$ selectively when the magnetic field is reversed. Thus, an output light beam $L_{out+}$ or an output light beam $L_{out-}$ is produced beams having different polarization from each other by $90°$.

Fig. 8 is a cross-sectional schematic view of the members 71 and 72 shown in Fig. 7, used for explaining the operational principle of the magneto-optic crystal. In the figure, a magnetic field H is induced, by the coil 72, in the member 71 having a length l and a thickness d. It should be recognized that the function for changing the plane of polarization can be improved by increasing the strength of the magnetic field H. However, generally, when a magnetic field H is applied, a demagnetizing field Hd is induced, opposing the magnetization. The symbols $+$ and $-$ represent magnetic poles for inducing the field Hd. In this case, a well known equation (11) exists.

$$Hd = N \cdot M \qquad (11)$$

(Where the symbol N denotes the demagnetizing factor and M denotes magnetization of the magneto-optic crystal).

As understood from the equation (11), if the value N ($0 < N < 1$) is large, the field Hd is also large. Consequently, effective magnetic field (H—Hd) is reduced to some extent. Therefore, it is necessary to reduce the value N so as to increase the strength of the effective magnetic field (H—Hd). In such circumstances, it is also a well known fact that the value N can be reduced toward zero by increasing the ratio l/d. Thus, the length l is enlarged and the thickness d is decreased, so that the ratio l/d may be increased. In this case, the length l is not selected at random, because the length l is defined by a wavelength of light passing through the crystal. If the crystal is made of YIG (Yttrium Iron Garnet) and a light having the wavelength of 1.3 $\mu m$ is used, the length l is limited to 2 mm. Then, the thickness d must be less than 60 $\mu m$, so as to make the value N almost zero.

Since the thickness d must be selected to be very small, a problem, which is similar to the above mentioned problem on the deleterious crosstalk, also rises in the device 71 of Fig. 7.

Under such circumstances, the above mentioned phase-matching layers, such as, the layers 42, 42', 43 and 43', will also be very effective for solving the above mentioned problem. Thus, an arrangement shown in Fig. 9 is preferable for the device 72. Fig. 9 is a cross-sectional view of the optical waveguide device, including the magneto-optic crystal, based on the first embodiment (Figs. 4, 5, 6A and 6B) of the present invention. In this figure, the members 71 and 72 have already been explained with reference to Fig. 8. Members 92, 93, 92' and 93' are phase-matching layers which are functionally similar to, respectively the phase-matching layers 42, 43, 42' and 43' shown in Fig. 6B according to the first embodiment. The layers 92 and 92' have the same refractive index as n1, the layers 93 and 93' have the same refractive index as n2, and the thickness (t) of these layers and the refractive indexes (n) satisfy the above recited equation (10). Thus, the device 71, which can be driven by low magnetic field, is realized by decreasing the thickness d thereof, without producing deleterious crosstalk. In the prior art, it is necessary to provide a magnetic field H of about 2,500 Oe in the magneto-optic crystal, comprised of a 45°-Faraday effect element. Contrary to this, according to the device shown in Fig. 9, the magnetic field can be reduced to about 100 Oe, in which the length l is 2 mm, the thickness d is 60 μm and light having a wavelength of 1.3 μm is used.

Fig. 10 is a cross-sectional view, partially cut off, of an optical waveguide device according to a second embodiment of the present invention. The device 100 has three phase-matching layers on each of the top and bottom surface of a transparent waveguide member 11. A transparent waveguide member 11 may be an electro-optic or a magneto-optic crystal. The three phase-matching layers are represented by the reference numerals 102 (102'), 103 and 104. The layers 102, 103 and 104 have refractive indexes of n1, n2 and n3, respectively. The refractive index of the member 11 is n0. In the second embodiment, the refractive indexes n0 to n3 are defined so as to satisfy the following inequalities (12) and (13).

$$n1 < n0 < n2 \qquad (12)$$

$$n3 < n0 < n2 \qquad (13)$$

(the relationship between n1 and n3 is free).

At the same time, the above recited equation (10) must also be satisfied. Taking as one example a case where the YIG crystal having the refractive index as n0 being equal to 2.2) is employed as the transparent waveguide member 11, the layers 102 and 104 are made of $SiO_2$ (having refractive indexes (n1, n3) being equal to 1.45). The layer 103 is made of SiH (having the refractive index of n2 being equal to 3.4). Further, the thicknesses t1 and t2 of the layers 102 and 103 should be 126 nm and 17 nm respectively, and the length l is 2 mm and the thickness d is 60 μm. The length l of 2 mm is suitable for light having a wavelength of about 1.3 μm. Regarding the layer 103, the refractive index as n2 can be adjusted at will by slightly varying the amount of addition of H to SiH. The second embodiment has an advantage in that such a device as shown in Fig. 10 can freely cope with a variation of wavelength of the light to be transmitted through the member 11. This is because, in the design of the device, the designer is allowed to select suitable values from four variables, that is n1, n2, t1 and t2. Thus, it is easy for the designer to determine the structure of the device with respect to various values of the wavelengths.

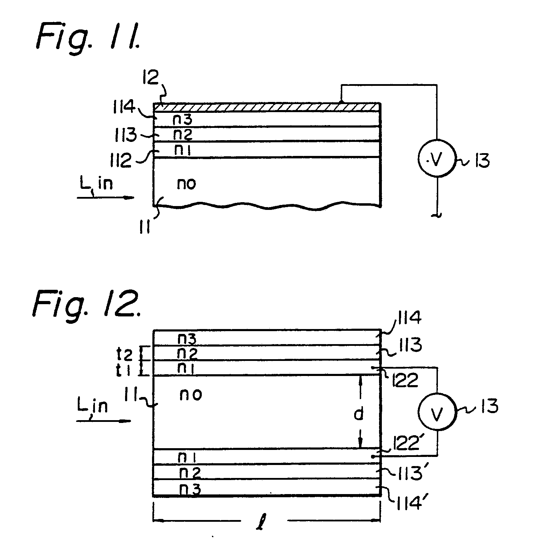

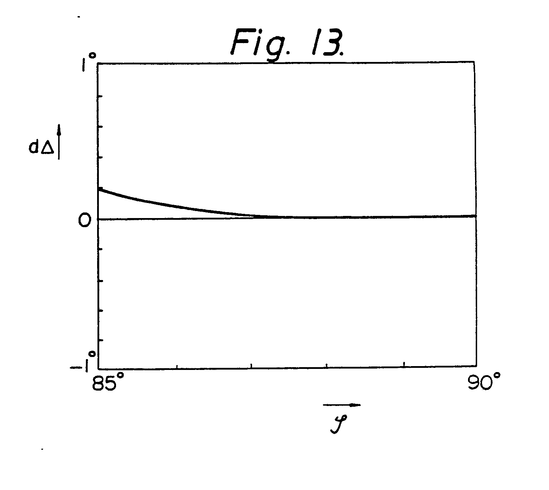

The above mentioned second embodiment can also be applied to the optical waveguide device including the electro-optic crystal. It should be noted that Fig. 10 illustrates such a device including the magneto-optic crystal. Fig. 11 is a cross-sectional view, partially cut off, of an optical waveguide device, including the electro-optic crystal, according to the present invention. In this figure, the members 11, 12 and 13 have already been explained. The reference numerals 112, 113 and 114 represent phase-matching layers which correspond respectively to the layers 102, 103 and 104 shown in Fig. 10. The layers 112, 113 and 114 must also satisfy the conditions relating to the above recited equation (10) and the expressions (12) and (13), so as to produce an advantage similar to the aforesaid advantage with reference to Fig. 11. Taking as one example, the member 11 is made of $Bi_{12}SiO_{20}$, the layer 112 is made of $SiO_2$ (thickness is greater than 1300 nm), the layer 113 is made of SiH (thickness is 183.5 nm) and the layer 114 is made of $SiO_2$ (thickness is 94 nm) and a relationship between an incidence angle φ and a difference of a phase shift $dΔ = (Δp − Δs)$ is as shown in Fig. 13.

However, according to the structure shown in Fig. 11, a certain problem rises. The problem is that an electric field, of the desired level, is not maintained across the crystal 11. This is because, two dielectric material members, that is the layers 112 and 114, are inserted between the electrode 12 and the crystal 11. In such an arrangement, the electric field to be induced in the crystal 11 is initially large, but the electric field gradually drops to a certain low level, which phenomenon is referred as a drift. The time constant of the drift is defined by CR, where the symbols C and R denote a capacitance and a leakage resistance developed across phase matching films (12') and the crystal 11. Thus, if the drift occurs remarkably, the crystal 11 cannot be supplied by the electric field which is high enough to cause the polarization therein after a certain time (=CR) has passed. In order to eliminate such a drift, the present invention provides such an arrangement in which the crystal 11 is covered, on its top and bottom surfaces, by conductive phase-matching layers, both acting as the electrodes (12, 12'). Alternatively, the crystal 11 is covered by the electrodes (12, 12') via conductive phase-matching layer or phase-matching layers, each having relatively low resistance values.

Fig. 12 is a side view of an optical waveguide device according to a third embodiment of the present invention. The third embodiment, illustrated in Fig. 12. can solve the aforesaid problem of the drift. In this figure, layers 122 and 122' are the conductive phase-matching layers to be connected to the power source 13. Since no dielectric material member exists between each electrode and the crystal 11, the drift cannot occur. The layers 122 (122'), 113 (113') and 114 (114') must satisfy, at the same time, the above recited equation (10) and the expressions (12) and (13). Taking as one example, the crystal 11 is made of $Bi_{12}SiO_{20}$ (having a refractive index (n0) being equal to 2.4) (it is also possible to use ZnTe as the crystal 11 which has a refractive index of 3.0), the phase-matching layer 113 is made of SiH (having a refractive index (n2) of 3.5), the phase-matching layer 114 is made of $SiO_2$ (having a refractive index (n3) of 1.45) and the conductive phase-matching layer 122 is made of $In_2O_3$ (or $SnO_2$) (having a refractive index (n1) of 2.0). The layer 122 is a transparent material. Further, the length l is about 2 cm, the thickness d is about 60 μm, the thickness t1 is 260 nm and the thickness t2 is 110 nm.

As previously mentioned, the conductive phase-matching layers 122 are not limited to being connected directly to the crystal 11, but second or more layers counted from the crystal 11, may be used as the conductive phase-matching layers. In the latter case, the conductive phase-matching layers must electrically be connected to the crystal 11 via other phase-matching layers, each having a relatively low resistance value.

The phase-matching layer of the present invention is effective not only for an optical waveguide member which is made of isotropic material, but also an optical waveguide member which is made of anisotropic material. The anisotropic optical waveguide member provides a characteristic of double refraction (birefringence). In this case, the value of the refractive index, regarding the P polarized light component, is different from that of the S polarized light component. However, the phase-matching layer of the present invention has the ability to eliminate the aforementioned crosstalk by suitably determining the relative refractive indices between the optical waveguide member and the phase-matching layer.

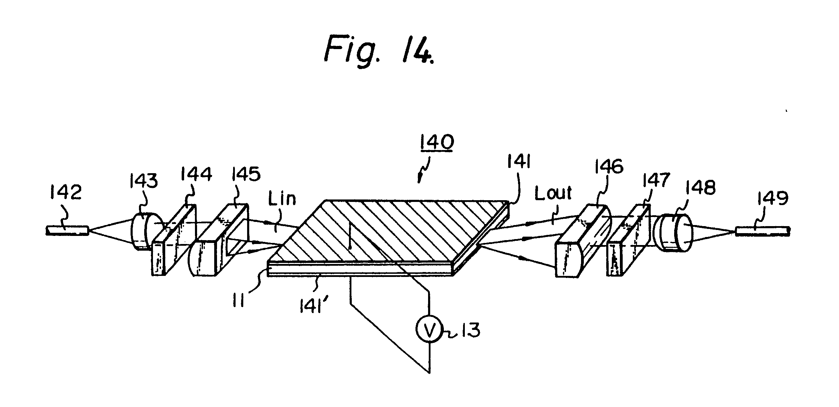

Figure 14 is a total perspective view of an optical waveguide apparatus including the optical waveguide device according to the present invention. In this figure, the optical waveguide device 140 is illustrated, taking as an example the electro-optic crystal. The members 11, 12 and 13 have already been explained. The reference numerals 141 and 141' indicate the phase-matching layers of the present invention. The symbols $L_{in}$ and $L_{out}$ are input light and output light, respectively. The input light $L_{in}$ is supplied from an optical fibre 142, via a plano-convex lens 143, a polarizer 144, a cylindrical (or semi-cylindrical) lens 145. On the other hand, the output light $L_{out}$ is directed onto an optical fibre 149, via a cylindrical (or semi-cylindrical) lens 146, an analyzer 147 and a plano-convex lens 148.

## Claims

1. An optical waveguide device comprising an optical waveguide member (11) having a refractive index n0 and whose thickness (d) is very much smaller than its length (l) along an optical axis, the waveguide member receiving a light beam ($L_{in}$) through an input surface, modifying the beam as it passes generally parallel to the optical axis, and emitting the modified light beam ($L_{out}$) from an output surface, the light beam having undergone a plurality of reflections from top and bottom surfaces of the waveguide member substantially parallel to the optical axis, characterized in that each of the top and bottom surfaces superimposed thereon has at least an inner and an outer transparent phase-matching layer (42, 43), the inner transparent phase matching layer (42) having a thickness t and a refractive index n1 and the outer transparent phase matching layer having a refractive index n2, the refractive indices satisfying the condition n2<n0<n1 and the thickness t of the inner transparent phase matching layer being such that the inner and outer transparent phase matching layers act to decrease substantially the difference between the phase shifts experienced on reflection at each of the top and bottom surfaces by P-polarised and S-polarised components of the light beam.

2. An optical waveguide device comprising an optical waveguide member (11) having a refractive index n0 and whose thickness (d) is very much smaller than its length (l) along an optical axis, the waveguide member receiving a light beam ($L_{in}$) through an input surface, modifying the beam as it passes generally parallel to the optical axis, and emitting the modified light beam ($L_{out}$) from an output surface, the light beam having undergone a plurality of reflections from top and bottom surfaces of the waveguide member substantially parallel to the optical axis, characterized in that each of the top and bottom surfaces has superimposed thereon an inner transparent phase-matching layer (102) having a thickness t1 and a refractive index n1 located on the waveguide member, an intermediate transparent phase-matching layer (103) having a thickness t2 and a refractive index n2 located on the inner phase-matching layer and an outer transparent phase-matching layer (104) having an refractive index n3 located on the intermediate phase-matching layer, the refractive indices satisfying the condition that n1<n0<n2 and n3<n0<n2, and the thicknesses t1 and t2 being such that the inner, intermediate and outer transparent phase-matching layers act to decrease substantially the difference between the phase shifts experienced on reflection at each surface by P-polarized and S-polarized components of the light beam.

3. A device as set forth in claim 1 or 2, wherein the optical waveguide member is made of a glass, or is an electro-optic crystal, or is a magneto-optic crystal.

4. A device as set forth in claim 1 or 2, wherein the optical waveguide member is an electro-optic crystal to which an external voltage is applied by way of a pair of electrodes.

5. A device as set forth in claim 4, wherein the inner layer is conductive and acts as one of the electrodes.

6. A device as set forth in claim 4, wherein the intermediate or outer layer acts as one of the electrodes, and wherein the intermediate or the outer layer is conductive and electrically connected to the optical waveguide member via an electrically conductive or low resistance layer or layers.

7. A device as set forth in claim 4, wherein the electro-optic crystal is made of $Bi_{12}SiO_{20}$, the inner layer and the outer layer are made of $SiO_2$ and the intermediate layer is made of SiH.

8. A device as set forth in claim 5, wherein the electro-optic crystal is made of $Bi_{12}SiO_{20}$, the inner layer is made of $In_2O_3$, the intermediate layer is made of SiH and the outer layer is made of $SiO_2$.

9. A device as set forth in claim 1 or 2, wherein the optical waveguide member is a magneto-optic crystal, the inner and the outer layers are made of $SiO_2$ and the intermediate layer is made of SiH.

**Patentansprüche**

1. Optische Wellenleitervorrichtung mit einem optischen Wellenleiterteil (11), das einen Brechungsindex n0 hat und dessen Dicke (d) sehr viel kleiner als seine Länge (l) längs einer optischen Achse ist, welches Wellenleiterteil einen Lichtstrahl ($L_{in}$) durch eine Eingangsoberfläche empfängt, den Strahl modifiziert, während er im allgemeinen parallel zu der optischen Achse hindurchtritt, und den modifizierten Lichtstrahl ($L_{out}$) von einer Ausgansoberfläche emittiert, welcher Lichtstrahl eine Vielzahl von Reflexionen an den oberen und unteren Oberflächen des Wellenleiterteils, die im wesentlichen parallel zu der optischen Achse sind, unterworfen wurde, dadurch gekennzeichnet, daß jede der oberen und unteren Oberflächen, ihr überlagert wenigstens eine innere und eine äußere transparente Phasenanpassungsschicht (42, 43), hat, wobei die innere transparente Phasenanpassungsschicht (42) eine Dicke t und einen Brechungsindex n1 und die äußere transparente Phasenanpassungsschicht einen Brechungsindex n2 hat, die Brechungsindizes die Bedingung n2<n0<n1 erfüllen und die Dicke der inneren transparenten Phasenanpassungsschicht so ist, daß die inneren und die äußeren transparenten Phasenanpassungsschichten eine wesentliche Erniedrigung der Differenz zwischen den Pasenverschiebungen verursachen, die bei einer Reflexion an jeder der oberen und unteren Oberflächen durch P-polarisierte und S-polarisierte Komponenten des Lichtstrahls erfahren werden.

2. Optische Wellenleitervorrichtung mit einem optischen Wellenleiterteil (11), welches einen Brechungsindex n0 hat und dessen Dicke (d) sehr viel kleiner als seine Länge (l) längs der optischen Achse ist, welches Wellenleiterteil einen Lichtstrahl ($L_{in}$) durch eine Eingangsoberfläche empfängt, den Lichtstrahl, während er im allgemeinen parallel zu der optischen Achse hindurchtritt, modifiziert, und den modifizierten Lichtstrahl ($L_{out}$) von einer Ausgangsoberfläche emittiert, welcher Lichtstrahl eine Vielzahl von Reflexionen zwischen oberen und unteren Oberflächen des Wellenleiterteils, die im wesentlichen parallel zur optischen Achse sind, unterworfen wurde, dadurch gekennzeichnet, daß jede der oberen und unteren Oberflächen, ihr überlagert, eine innere transparente Phasenanpassungsschicht (102) mit einer Dicke t1 und einem Brechungsindex n1 haben, die auf dem Wellenleiterteil angeordnet ist, eine transparente Zwischenphasenanpassungsschicht (103), mit einer Dicke t2 und einem Brechungsindex n2, die auf der inneren Phasenanpassungsschicht angeordnet ist, und eine äußere transparente Phasenanpassungsschicht (104), mit einem Brechungsindex n3, die auf der Zwischenphasenanpassungsschicht angeordnet ist, wobei die Brechungsindices die Bedingungen n1<n0<n2 und n3<n0<n2 erfüllen und die Dicken t1 und t2 so bemessen sind, daß die inneren, die mittleren und die äußeren transparenten Phasenanpassungsschichten eine wesentliche Verringerung der Differenz zwischen den Phasenverschiebungen bewirken, die bei der Reflexion an der Oberfläche durch P-polarisierte und S-polarisierte Komponenten des Lichtstrahls erfahren werden.

3. Vorrichtung nach Anspruch 1 oder 2, bei welcher das optische Wellenleiterteil aus Glas, einem elektro-optischen Kristall oder einem magneto-optischen Kristall besteht.

4. Vorrichtung nach Anspruch 1 oder 2, bei welcher das optische Wellenleiterteil ein eletrooptischer Kristall ist, dem eine externe Spannung über ein Paar von Elektroden zugeführt ist.

5. Vorrichtung nach Anspruch 4, bei welcher die innere Schicht leitend ist und als eine der Elektroden wirkt.

6. Vorrichtung nach Anspruch 4, bei welcher die Zwischenschicht oder äussere Schicht als eine der Elektroden wirkt und bei welcher die Zwischenschicht oder äussere Schicht leitend und über eine elektrisch leitende oder niederohmige Schicht oder Schichten mit dem optischen Wellenleiterteil elektrisch verbunden ist.

7. Vorrichtung nach Anspruch 4, bei welcher der elektro-optische Kristall aus $Bi_{12}SiO_{20}$, die

innere und die äussere Schicht aus SiO$_2$ und die Zwischenschicht aus SiH hergestellt ist.

8. Vorrichtung nach Anspruch 5, bei welcher der elektro-optische Kristall aus Bi$_{12}$SiO$_{20}$, die innere Schicht aus In$_2$O$_3$, die Zwischenschicht aus SiH und die äussere Schicht aus SiO$_2$ hergestellt ist.

9. Vorrichtung nach Anspruch 1 oder 2, bei welcher das optische Wellenleiterteil ein magneto-optischer Kristall, die innere und die ässere Schicht aus SiO$_2$ und die Zwischenschicht aus SiH hergestellt ist.

**Revendications**

1. Dispositif-guide d'ondes optique comprenant un élément-guide d'ondes optique (11) ayant un indice de réfraction n0 et dont l'épaisseur (d) est très inférieure à sa longueur (l) le long d'un axe optique, l'élément-guide d'ondes recevant un faisceau lumineux (L$_E$) par une surface d'entrée, modifiant le faisceau quand il se propage dans son ensemble parallèlement à l'axe optique, et émettant le faisceau lumineux modifié (L$_S$) par une surface de sortie, le faisceau lumineux ayant subi un ensemble de réflexions par les surfaces supérieure et inférieure de l'élément-guide d'ondes essentiellement parallèles à l'axe optique, caractérisé en ce que chacune des surfaces supérieure et inférieure comporte au moins une couche intérieure et une couche extérieure transparentes de mise en accord de phase (42, 43) qui sont superposées à celle-ci, la couche intérieure transparente de mise en accord de phase (42) ayant une épaisseur t et un indice de réfraction n1 et la couche extérieure transparente de mise en accord de phase ayant un indice de réfraction n2, les indices de réfraction satisfaisant la condition n2<n0<n1 et l'épaisseur t de la couche intérieure transparente de mise en accord de phase étant telle que les couches intérieure et extérieure transparentes de mise en accord de phase agissent pour diminuer sensiblement la différence entre les déphasages produits par réflexion sur chacune des surfaces supérieure et inférieure des composantes du faisceau lumineux polarisées P et polarisées S.

2. Dispositif-guide d'ondes optique comprenant un élément-guide d'ondes optique (11) ayant un indice de réfraction n0 et dont l'épaisseur (d) est très inférieure à sa lingueur (l) le long d'un axe optique, l'élément-guide d'ondes recevant un faisceau lumineux (L$_E$) par une surface d'entrée, modifiant le faisceau quand il se propage dans son ensemble parallèlement à l'axe optique, et émettant le faisceau lumineux modifié (L$_S$) par une surface de sortie, le faisceau lumineux ayant subi un ensemble de réflexions par les surfaces supérieure et inférieure de l'élément-guide d'ondes essentiellement parallèles à l'axe optique, caractérisé en ce que chacune des surfaces supérieure et inférieure comporte au moins une couche intérieure transparente de mise en accord de phase (102) ayant une épaisseur t1 un indice de réfraction n1 placée sur l'élément-guide d'ondes, une couche intermédiaire transparente de mise en accord de phase (103) ayant une épaisseur t2 et un indice de réfraction n2 placée sur la couche intérieure de mise en accord de phase et une couche extérieure transparente de mise en accord de phase (104) ayant un indice de réfraction n3 placée sur la couche intermédiaire de mise en accord de phase, ces couches étant superposées à la surface, les indices de réfraction satisfaisant la condition n1<n0<n2 et n3<n0<n2, et les épaisseurs t1 et t2 étant telles que les couches intérieure, intermédiaire et extérieure transparentes de mise en accord agissent pour diminuer sensiblement la différence entre les déphasages produits par réflexion sur chaque surface des composantes du faisceau lumineux polarisées P et polarisées S.

3. Dispositif selon l'une quelconque des revendications 1 et 2, dans lequel l'élément-guide d'ondes optique est constitué d'un verre, ou est un cristal électro-optique, ou est un cristal magnéto-optique.

4. Dispositif selon l'une quelconque des revendications 1 et 2, dans lequel l'élément-guide d'ondes optique est un cristal électro-optique auquel est appliquée une tension extérieure au moyen d'une paire d'électrodes.

5. Dispositif selon la revendication 4, dans lequel la couche intérieure est conductrice et agit comme l'une des électrodes.

6. Dispositif selon la revendication 4, dans lequel la couche intermédiaire ou la couche extérieure agit comme l'une des électrodes, et dans lequel la couche intermédiaire ou la couche extérieure est conductrice et connectée électriquement à l'élément-guide d'ondes optique par l'intermédiaire d'une couche ou de couches électriquement conductrices ou de faible résistance.

7. Dispositif selon la revendication 4, dans lequel le cristal électro-optique est constitué de Bi$_{12}$SiO$_{20}$, la couche intérieure et la couche extérieure sont constituées de SiO$_2$ et la couche intermédiaire est constituée de SiH.

8. Dispositif selon la revendication 5, dans lequel le cristal électro-optique est constitué de Bi$_{12}$SiO$_{20}$, la couche intérieure est constituée de In$_2$O$_3$, la couche intermédiaire est constituée de SiH et la couche extérieure est constituée de SiO$_2$.

9. Dispositif selon l'une quelconque des revendications 1 et 2, dans lequel l'élément-guide d'ondes optique est un cristal magnéto-optique, la couche intérieure et la couche extérieure sont constituées de SiO$_2$ et la couche intermédiaire est constituée de SiH.

*Fig. 1*

*Fig. 2*

*Fig. 3*

*Fig. 4*

## Fig. 5

## Fig. 6A

## Fig. 6B

## Fig. 7

$L_{in}$

72

71

$L_{out}$

73

$L_{out} +$

$L_{out} -$

## Fig. 8

72

71

$L_{in}$

H

$H_d$

d

$\ell$

72

## Fig. 9

72

$L_{in}$

n2 ——— 93

n1 ——— 92

n0 ——— 71

n1 ——— 92'

n2 ——— 93'

72

100

104 —— n3

103 —— n2

102 —— n1

n0

11 —

102' —

t2

t1

d

$\ell$

## Fig. 10

*Fig. 11.*

*Fig. 12.*

4

# Fig. 13.

Fig. 14.